# EUROPÄISCHE PATENTSCHRIFT

(11) **EP 3 383 581 B1**
(45) Veröffentlichungstag und Bekanntmachung des Hinweises auf die Patenterteilung: **05.02.2020**
(21) Anmeldenummer: 16815758.4
(22) Anmeldetag: 07.12.2016
(51) Int. Cl.: B23Q 9/00, B23P 6/00, F01D 5/00, F01D 5/30, F01D 25/28, B23Q 9/02, B23D 43/02

(54) **AUFBAU FÜR LÄNGLICHE AUSNEHMUNGEN, INSBESONDERE NUTEN**
STRUCTURE FOR ELONGATED RECESSES, IN PARTICULAR GROOVES
STRUCTURE POUR DES ÉVIDEMENTS ALLONGÉS, EN PARTICULIER DES RAINURES

(30) Priorität: 30.03.2016 DE 102016205222
(43) Veröffentlichungstag der Anmeldung: 10.10.2018
(73) Patentinhaber: Siemens Aktiengesellschaft, 80333 München (DE)
(72) Erfinder: HEINE, Wolfgang, 82008 Unterhaching (DE); KÖRDEL, Martin, 28209 Charlotte (US); EULER, Helmuth, 85625 Glonn (DE); SCHICK, Anton, 84149 Velden (DE)
(86) Internationale Anmeldenummer: PCT/EP2016/080007
(87) Internationale Veröffentlichungsnummer: WO 2017/167412

(56) Entgegenhaltungen:
- EP-A1- 1 568 439
- EP-A2- 0 486 131
- DE-A1-102008 000 480
- DE-C- 885 001
- US-A1- 2014 223 709

## Beschreibung

Die Erfindung betrifft einen Aufbau zur Positionierung und Befestigung eines an den Aufbau befestigbaren Werkzeuges an einer sich entlang einer ersten Längsachse sich räumlich erstreckenden, insbesondere einen Öffnungswinkel, und an zwei Stirnseiten, insbesondere vier, Endoberflächen aufweisenden länglichen Ausnehmung, insbesondere Nut, insbesondere eines Rotors, insbesondere eines Gasturbinenrotors, und ein dazugehöriges Verfahren zur Positionierung und Befestigung.

Zur Inspektion, zur dimensionalen Vermessung, zur Bearbeitung und zur Revision von Gasturbinen-Rotornuten, insbesondere geraden Nuten, sind verschiedene Werkzeuge erforderlich. Um diese Werkzeuge in den Nuten zu betreiben, müssen diese relativ zu der Nut positioniert und befestigt werden.

Herkömmlicher Weise werden individuelle Modelle als Werkzeuge verwendet. Diese werden nicht an der Nut und dem Rotor befestigt und manuell positioniert.

Aus der EP 0 486 131 A2 ist eine an einem Rotor befestigbare Vorrichtung bekannt, mittels welcher ein Schneidwerkzeug führbar ist. Die Vorrichtung weist ein Befestigungselement auf, welches eine mit einer Rotorblattnut korrespondierende Kontur aufweist. Über das Befestigungselement ist eine Plattform mit einem Werkzeugführungsschlitz an der Rotorblattnut befestigbar. Mittels der Vorrichtung ist der Rotor, insbesondere ein Gasturbinenrotor, bearbeitbar, ohne den Rotor von seiner Befestigung zu lösen.

Des Weiteren ist aus der EP 1 568 439 A1 ein Verfahren zum Reparieren von Zahnradzähnen bekannt, bei welchem an mehreren Zähnen eine Vorrichtung abgestützt wird, mittels welcher ein Schneidwerkzeug führbar ist.

Darüber hinaus ist aus der US 2014/223709 A1 ein Fräsmaschinensystem für Turbomaschinenrotorblätter bekannt. Dieses Fräsmaschinensystem umfasst einen Führungsschlitz für ein Fräswerkzeug aufweisenden Grundkörper, welcher über jeweilige Befestigungselemente in jeweiligen Rotornuten befestigbar ist. Mittels des Fräswerkzeugs ist wenigstens eine Rotornut fräsbar.

Überdies offenbart die DE 10 2008 000 480 A1 eine Vorrichtung zur Nachbearbeitung von Befestigungsnuten, welche einer Aufnahme von Beschaufelungen in einer Gas- und/oder Dampfturbinenanlage dienen. Die Vorrichtung umfasst ein beweglich gelagerte Rollenelemente aufweisendes Führungsmittel, welches über die Rollenelemente in den Befestigungsnuten zwangsgeführt ist. Das Führungsmittel weist eine Aufnahme- und Fixiereinheit für ein materialabtragendes Werkzeug auf.

Es ist Aufgabe der vorliegenden Erfindung eine Bearbeitung einer länglichen Ausnehmung, beispielsweise einer Nut, insbesondere eines Turbinenrotors, mit einer Vielzahl von verschiedenen Werkzeugen einfach, kostengünstig, wirksam, sicher und genau zu ermöglichen. Es soll ein Werkzeug einfach, sicher und genau relativ zu der Nut positioniert und befestigt werden können.

Eine Ausnehmung ist insbesondere ein räumlicher Bereich eines Materialkörpers, in dem kein Material des Körpers vorhanden ist.

Die Aufgabe wird durch einen Aufbau gemäß Anspruch 1 und ein Verfahren gemäß Anspruch 10 gelöst.

Gemäß einem ersten Aspekt wird ein Aufbau zur Positionierung und Befestigung eines an den Aufbau befestigbaren Werkzeuges an einer sich entlang einer ersten Längsachse sich räumlich erstreckenden und an zwei Stirnseiten, insbesondere vier, Endoberflächen aufweisenden länglichen Ausnehmung, insbesondere Nut, insbesondere eines Rotors, vorgeschlagen, wobei der Aufbau eine eine entlang einer zweiten Längsachse sich räumlich erstreckende und mit dieser parallel zu der ersten Längsachse ausrichtbare Aussparung aufweisende und die längliche Ausnehmung, beispielsweise Nut, einrahmende Platte aufweist, die mit einer Zentriereinrichtung und einer Klemmeinrichtung fest verbunden ist, wobei die Zentriereinrichtung mindestens eine Zentrierbacke aufweist, die in der Aussparung entlang der zweiten Längsachse und in die sowie aus der länglichen Ausnehmung bewegbar ist, wobei die Klemmeinrichtung auf der der länglichen Ausnehmung zugewandten Seite der Platte Klemmbacken aufweist, die jeweils entlang der zweiten Längsachse bewegbar und mit einer der Endoberflächen der zwei Stirnseiten der länglichen Ausnehmung mechanisch kontaktierbar und lösbar befestigbar sind.

Eine Aussparung ist insbesondere ein räumlicher Bereich eines Materialkörpers, in dem kein Material des Körpers vorhanden ist. Die Aussparung kann als durchgängige Öffnung erzeugt sein.

Erfindungsgemäß wird ein Bearbeitungsaufbau für längliche Ausnehmungen, insbesondere Nuten, insbesondere für Gasturbinen-Rotornuten, als eine mechanische Basis für die Anwendung verschiedener Werkzeuge vorgeschlagen. Dieser Bearbeitungsbau weist insbesondere eine Zentrierungs- und eine Klemmeinrichtung aus.

Gemäß einem zweiten Aspekt wird ein Verfahren zur Positionierung und Befestigung eines an einem gemäß einem der vorhergehenden Ansprüche geschaffenen Aufbau befestigbaren Werkzeuges an einer sich entlang einer ersten Längsachse sich räumlich erstreckenden und an zwei Stirnseiten vier Endoberflächen aufweisenden länglichen Ausnehmung, insbesondere Nut, insbesondere eines Rotors, mit den folgenden Schritten vorgeschlagen. Bewegen der Zentrierbacken der Zentriereinrichtung in die Nut. Bewegen der Klemmbacken der Klemmeinrichtung jeweils entlang der zweiten Längsachse und mechanisches Kontaktieren mit jeweils einer der, insbesondere vier, Endoberflächen der zwei Stirnseiten der länglichen Ausnehmung und Befestigen an den Endoberflächen.

Vorteilhaft ist der Aufbau kompakt, tragbar, modular und für eine große Vielzahl von Werkzeugen geeignet. Er kombiniert die gesamten Verfahrensschritte des Zentrierens und Klemmens entlang der länglichen Ausnehmung, insbesondere der Nut, in einem Schritt ohne jede manuelle Feineinstellungen. Deshalb sind an den Aufbau befestigte Werkzeuge bereits relativ zu der länglichen Ausnehmung, zu deren Wänden und zu der Längsachse der länglichen Ausnehmung positioniert. Das Klemmen ist an den vorderen/hinteren (Stirn-) Oberflächen der länglichen Ausnehmungen, insbesondere Nuten, derart ausführbar, dass die innere Oberfläche der länglichen Ausnehmung weder blockiert noch beschädigt wird. Dies hält den Zentriermechanismus. Dies ist ideal geeignet insbesondere für Serviceanwendungen sowie für Herstellungsanwendungen.

Weitere vorteilhafte Ausgestaltungen werden in Verbindung mit den Unteransprüchen beansprucht.

Gemäß einer vorteilhaften Ausgestaltung kann die Zentrierbacke sich in einem Querschnitt zu der zweiten Längsachse über den Verlauf der länglichen Ausnehmung in einem Querschnitt zu der ersten Längsachse räumlich hinaus erstrecken und in die längliche Ausnehmung klemmbar sein. Ein Umriss der Zentrierbacke ist vorteilhaft größer als der der Ausnehmung und an diese insbesondere für einen Formschluss angepasst. Die Zentrierbacken können sich in Richtung zu der länglichen Ausnehmung im Querschnitt verjüngen.

Gemäß einer weiteren vorteilhaften Ausgestaltung kann die Zentrierbacke die Form eines Keils, eines Kegels, eines Kegelstumpfes, einer Halbkugel oder eines Quaders aufweisen und insbesondere aus Kunststoff bestehen.

Gemäß einer weiteren vorteilhaften Ausgestaltung kann die Zentrierbacke lotrecht zur Platte oder von einer der Stirnseiten der ersten Längsachse in die sowie aus der länglichen Ausnehmung bewegbar sein.

Gemäß einer weiteren vorteilhaften Ausgestaltung können zwei einen Öffnungswinkel der länglichen Ausnehmung ausbildende Keile erzeugende Zentrierbacken und vier Klemmbacken geschaffen sein. Mittels zweier Keile ist eine Zentrierung entlang der ersten Längsachse wirksam vereinfacht. Zwei Keile sind ebenso einfach entfernbar.

Gemäß einer weiteren vorteilhaften Ausgestaltung kann die längliche Aussparung entlang der zweiten Längsachse sich räumlich über die Länge der länglichen Ausnehmung entlang der ersten Längsachse derart hinaus erstrecken, dass die Zentrierbacke (N) aus der länglichen Ausnehmung heraus und entlang der zweiten Längsachse über die Endoberfläche (n) hinaus außerhalb der länglichen Ausnehmung bewegbar ist/sind. In der Ausgestaltung von zwei Keilen können diese einfach über die beiden Endoberflächen hinaus außerhalb der länglichen Ausnehmung bewegt werden.

Gemäß einer weiteren vorteilhaften Ausgestaltung kann der Abstand zweier Klemmbacken an zwei Stirnseiten größer als die Länge der länglichen Ausnehmung sein. Auf diese Weise können Klemmbacken einfach gegen Stirnseiten gedrückt werden.

Gemäß einer weiteren vorteilhaften Ausgestaltung kann der mechanische Kontakt der Klemmbacken mit den Stirnseiten der länglichen Ausnehmung mittels mechanischem Druck oder Magnetkraft geschaffen sein.

Gemäß einer weiteren vorteilhaften Ausgestaltung können die Klemmbacken zur Anpassung an einen Winkel zwischen der ersten Längsachse und einer dritten Längsachse einer Rotorwelle um ein Lot zur Platte drehbar einstellbar sein. Damit erlaubt die Klemmeinrichtung die Kompensation von Scherkräften mittels Einbauen drehbar feineinstellbarer Klemmbacken.

Gemäß einer weiteren vorteilhaften Ausgestaltung kann ein Drehen der Klemmbacken zur Anpassung an einen Winkel zwischen der ersten Längsachse und einer dritten Längsachse einer Rotorwelle um ein Lot zur Platte ausgeführt werden.

Gemäß einer weiteren vorteilhaften Ausgestaltung kann ein Bewegen der Zentrierbacke (m) lotrecht zur Platte aus der länglichen Ausnehmung heraus und entlang der zweiten Längsachse über die Endoberfläche (n) hinaus außerhalb der länglichen Ausnehmung ausgeführt werden. Auf diese Weise können die Zentrierbacken aus einem Arbeitsbereich eines Werkzeugs bzw. aus dem Bereich der länglichen Ausnehmung entfernt werden.

Gemäß einer weiteren vorteilhaften Ausgestaltung kann ein Bewegen der Zentrierbacke(n) aus den Stirnseiten der länglichen Ausnehmung heraus ausgeführt werden.

Die Erfindung wird anhand von Ausführungsbeispielen in Verbindung mit den Figuren näher beschrieben. Es zeigen:
- Figur 1: eine Ansicht auf einen herkömmlichen Rotor;
- Figur 2: eine erste Ansicht auf einen erfindungsgemäßen Aufbau;
- Figur 3: eine zweite Ansicht auf einen erfindungsgemäßen Aufbau;
- Figur 4: eine dritte Ansicht auf einen erfindungsgemäßen Aufbau;
- Figur 5: eine vierte Ansicht auf einen erfindungsgemäßen Aufbau;
- Figur 6: eine fünfte Ansicht auf einen erfindungsgemäßen Aufbau;
- Figur 7: ein Ausführungsbeispiel eines erfindungsgemäßen Verfahrens.

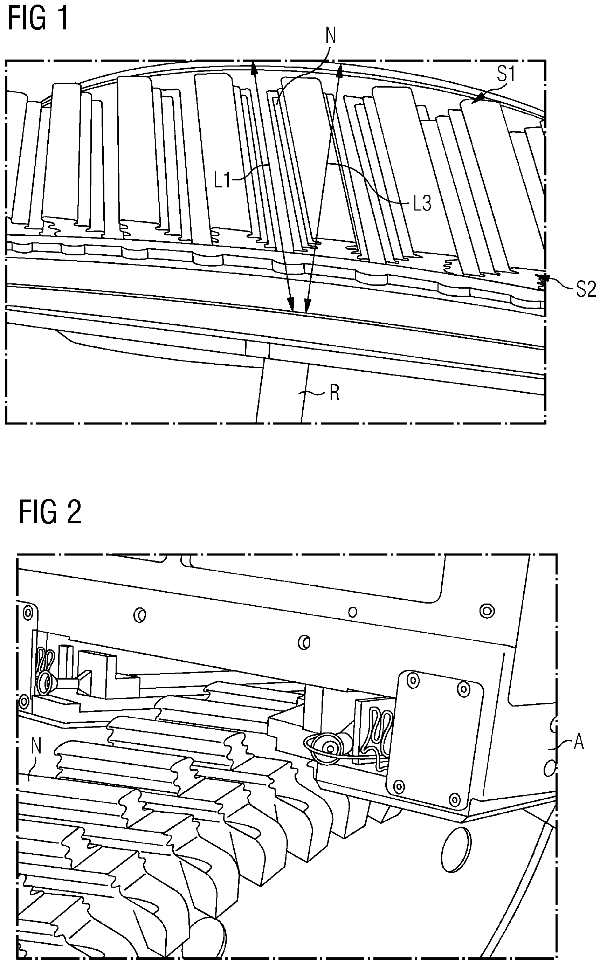

Figur 1 zeigt eine Ansicht auf einen herkömmlichen Gasturbinenrotor. Dieser weist eine Vielzahl von Nuten N auf. Dabei erstreckt sich eine Nut N entlang einer ersten Längsachse L1. Jede Nut weist an zwei Stirnseiten S1 und S2 zusammen vier Endoberflächen auf. Die Draufsicht zeigt, dass eine Nut N einen Öffnungswinkel aufweist, mit der sich eine Nut N radial zu einer Rotorwelle R erweitert. Figur 1 zeigt wie die Rotorwelle R sich entlang einer dritten Längsachse L3 räumlich erstreckt. Figur 1 zeigt, dass zwischen der ersten Längsachse L1 und der dritten Längsachse L3 ein Winkel ausgebildet ist.

Figur 2 zeigt eine erste Ansicht auf ein Ausführungsbeispiel eines erfindungsgemäßen Aufbaus. Der Aufbau A kann ebenso als Plattform bezeichnet werden. Ebenso kann diese Plattform zum Tragen eines beliebigen Werkzeugs ebenso als Tooling-Plattform bezeichnet werden. Diese bietet unterschiedlichsten Werkzeugen, wie beispielsweise einem Messkopf oder einem Fräser, eine definierte und stabile Befestigung beispielsweise an einer Gasturbinen-Nut N. Der Aufbau A ist in erster Näherung ein die Nut N umgebender Rahmen, der fest mit der nachfolgend beschriebenen Zentriereinrichtung 1 und Klemmeinrichtung 5 verbunden ist.

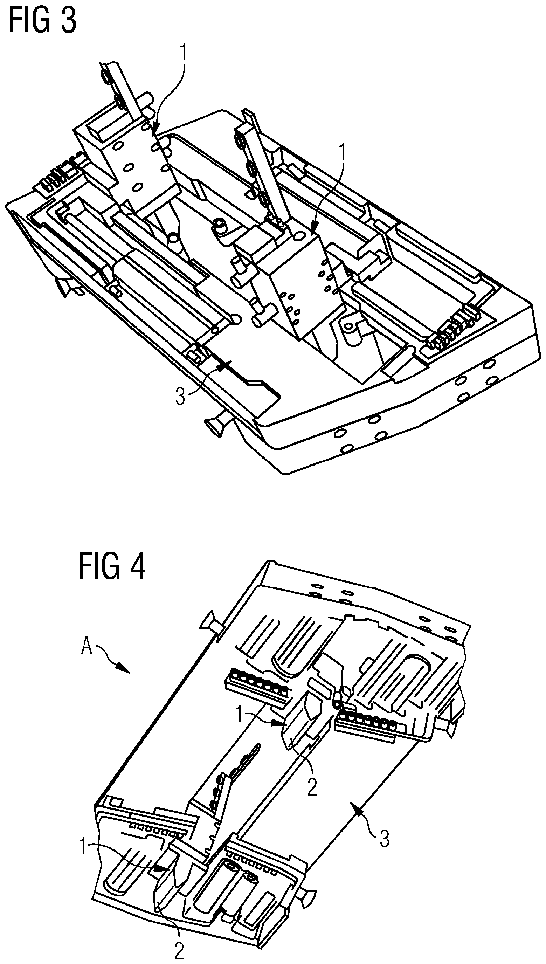

Figur 3 zeigt eine zweite Ansicht eines Ausführungsbeispiels eines erfindungsgemäßen Aufbaus. Figur 3 zeigt die Zentriereinrichtung 1, die ebenso als Zentriermechanismus bezeichnet werden kann. Der Zentriermechanismus dient zur Ausrichtung des Aufbaus A bzw. der Plattform entlang der Achse, insbesondere der ersten Längsachse L1 einer jeweiligen länglichen Ausnehmung, die beispielsweise eine Nut N sein kann. Beispielsweise kann ein erfindungsgemäßer Aufbau ebenso auf Spalten aufgebracht werden. Er besteht gemäß diesem Ausführungsbeispiel aus zwei beweglichen Zentrierbacken 2, die hier beispielsweise keilförmig einem Öffnungswinkel der Nuten N angepasst sind. Diese Ausgestaltung ermöglicht eine sofortige Zentrierung der Achse, insbesondere der zweiten Längsachse L2, der Plattform, die insbesondere als Platte ausgebildet ist, mit der ersten Längsachse L1, die der Nut N zugeordnet ist. Um die Zentrierung hervorzurufen, kann eine lotrechte Bewegung der Zentrierbacken 2 erfolgen. Dies kann entweder mittels der Bewegung der Backen relativ zur Plattform bzw. der Platte oder der Bewegung der gesamten Plattform bzw. des Aufbaus A erfolgen, beispielsweise infolge Eigengewichts. Die Zentrierung kann alternativ mittels Einführen der Zentrierbacken 2 von den Stirnseiten der länglichen Ausnehmung her ausgeführt werden. Die Zentrierbacken 2 können je nach deren räumlichen Ausgestaltung zudem in die längliche Ausnehmung hineingedreht werden.

Ist die Zentrierung erfolgt, muss die Klemmung erfolgen, um die Zentrierbacken 2 aus der Nut N heraus bewegen zu können, ohne dass die Ausrichtung verloren geht. Nach erfolgter Klemmung müssen die Zentrierbacken 2 zunächst in lotrechter bzw. vertikaler Richtung aus der Nut N heraus bewegt werden und dann in Richtung entlang der zweiten Längsachse L2, die eine horizontale Richtung sein kann, nach außen, damit die Nut N entlang ihrer vollen Länge frei zugänglich wird.

Figur 4 zeigt eine dritte Ansicht auf ein Ausführungsbeispiel eines erfindungsgemäßen Aufbaus. Figur 4 zeigt einen Aufbau A von der den jeweiligen Nuten N oder länglichen Ausnehmungen zugewandten Seite. Figur 4 zeigt die Zentrierbacken 2, die hier keilförmig ausgebildet sind und mit ihrer Geometrie einem Öffnungswinkel der Nut entsprechen, so dass die Zentrierbacken 2 die Platte 3 und damit den Aufbau A zentrieren können. Vorteilhaft werden zwei Zentrierbacken 2 verwendet, da auf diese Weise eine einfache Ausrichtung der zweiten Längsachse L2 parallel zu der ersten Längsachse L1 ausgeführt werden kann. Ebenso können zwei Zentrierbacken 2 einfach aus dem Bereich der Nuten entlang der zweiten Längsachse heraus bewegt werden, was für eine optimale Zugänglichkeit des Werkzeugs vorteilhaft ist.

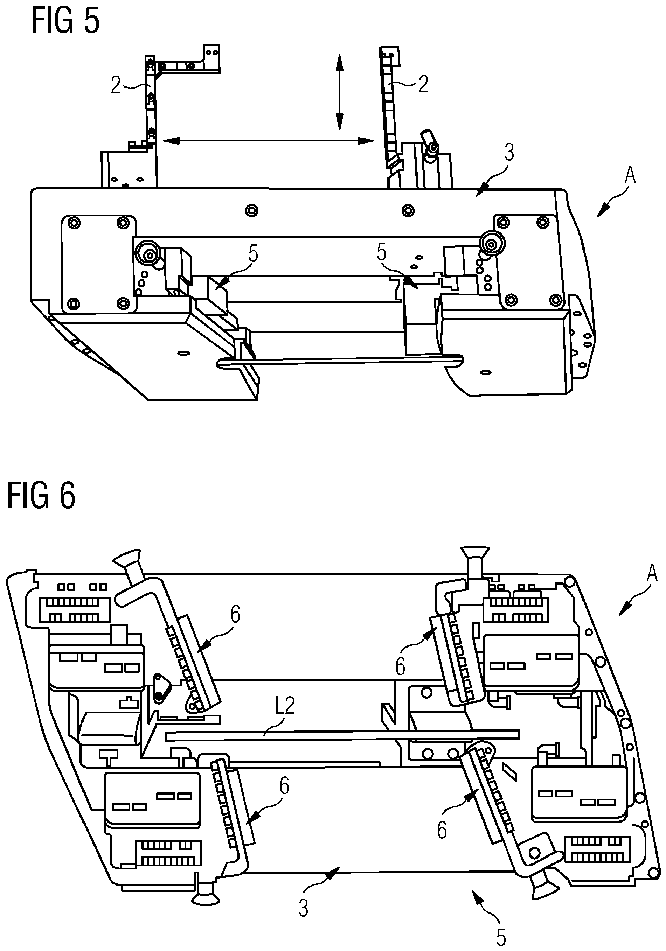

Figur 5 zeigt eine vierte Ansicht eines erfindungsgemäßen Aufbaus A. Figur 5 zeigt insbesondere die Klemmvorrichtung 5, die zur Halterung des Aufbaus A an den Stirnseiten S1 und S2 der jeweiligen Nuten N dient. Die Klemmvorrichtung 5 weist gemäß dieser Ausgestaltung vier Klemmbacken 6 auf, und zwar zwei pro Seite S1 und S2, die sich entlang der zweiten Längsachse L2 bewegen lassen. Der Aufbau A weist eine eine entlang einer zweiten Längsachse L2 sich räumlich erstreckende und mit dieser parallel zu der ersten Längsachse L1 ausrichtbare Aussparung aufweisende und die Nut einrahmende Platte 3 auf, die mit der Zentriereinrichtung 1 und der Klemmeinrichtung 5 fest verbunden ist. Der Abstand zwischen den Klemmbacken 6 von Stirnseite S1 zur Stirnseite S2 entspricht etwas mehr als die Länge der Nut N entlang der ersten Längsachse L1. Ist die Zentrierung der Plattform bzw. des Aufbaus A erfolgt, sorgen die Klemmbacken 6 mittels mechanischem Kontakt, beispielsweise mittels Druck oder Magnetkraft, zur Stirnseite S1 und S2 der Nuten N für die Fixierung des Aufbaus A an der Nut N. Da die Nuten N einen Winkel zur dritten Längsachse L3 aufweisen, der der Turbinenwelle zugeordnet ist, besitzen die Klemmbacken 6 im Winkel einstellbare Backen. Figur 5 zeigt auf einer Oberseite des Aufbaus A die Zentriereinrichtung 1 mit zwei Zentrierbacken 2, die längs der zweiten Längsachse L2 und lotrecht zur Platte 3 bewegbar sind.

Figur 6 zeigt eine fünfte Ansicht auf einen erfindungsgemäßen Aufbau A. Figur 6 zeigt den Aufbau A bzw. die Plattform von der den jeweiligen Nuten N zugewandten Seite. Figur 6 zeigt die Klemmeinrichtung 5, die hier vier Klemmbacken 6 aufweist. Diese sind entlang der zweiten Längsachse L2 beweglich. Zusätzlich sind die Klemmbacken 6 um ein Lot senkrecht zur Platte 3 in einem Winkel einstellbar. Mittels dieser Winkeleinstellung wird gewährleistet, dass keine Schwerkräfte während der Klemmung auftreten. Mittels der Klemmung an den Stirnseiten S1 und S2 der Nut N wird sichergestellt, dass keine funktionale Fläche infolge mechanischer Beanspruchung in Mitleidenschaft gezogen wird.

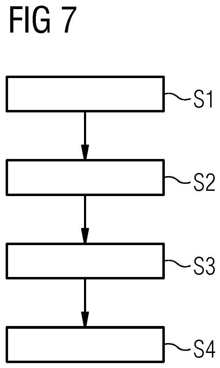

Figur 7 zeigt ein Ausführungsbeispiel eines erfindungsgemäßen Verfahrens. Mit einem ersten Schritt ST1 erfolgt ein Bewegen der Zentrierbacken der Zentriereinrichtung entlang der zweiten Längsachse und lotrecht zur Platte in die Nut. Mit einem zweiten Schritt ST2 erfolgt ein Bewegen der Klemmbacken der Klemmeinrichtung jeweils entlang der zweiten Längsachse und ein mechanisches Kontaktieren mit jeweils einer der vier Endoberflächen der zwei Stirnseiten der Nut und ein Befestigen an den Endoberflächen, wobei während des zweiten Schritts ein Drehen der Klemmbacken zur Anpassung an einen Winkel zwischen der ersten Längsachse und einer dritten Längsachse einer Rotorwelle um ein Lot zur Platte erfolgt. Mit einem abschließenden dritten Schritt ST3 erfolgt ein Bewegen der Zentrierbacken lotrecht zur Platte aus der Nut heraus und entlang der zweiten Längsachse über die Endoberflächen hinaus außerhalb der Nut. Im Ergebnis ist nun ein Werkzeug relativ zu einer Nut positioniert, so dass die jeweilige Nut mittels des Werkzeugs bearbeitet werden kann. Dabei ist die Nut dem Werkzeug vollständig zugänglich.

## Patentansprüche

1. Aufbau (A) zur Positionierung und Befestigung eines an den Aufbau befestigbaren Werkzeuges an einer sich entlang einer ersten Längsachse (L1) sich räumlich erstreckenden und an zwei Stirnseiten (S1, S2) Endoberflächen aufweisenden länglichen Ausnehmung, insbesondere Nut (N), insbesondere eines Rotors, wobei
- der Aufbau eine eine entlang einer zweiten Längsachse (L2) sich räumlich erstreckende und mit dieser parallel zu der ersten Längsachse ausrichtbare Aussparung aufweisende und die längliche Ausnehmung einrahmende Platte (3) aufweist, die mit einer Zentriereinrichtung fest verbunden ist;
- wobei die Zentriereinrichtung (1) mindestens eine Zentrierbacke (2) aufweist, **dadurch gekennzeichnet dass**,
die Platte (3) mit einer Klemmeinrichtung fest verbunden ist und die Zentrierbacke
in der Aussparung entlang der zweiten Längsachse und in die sowie aus der länglichen Ausnehmung bewegbar ist;
- wobei die Klemmeinrichtung (5) auf der der länglichen Ausnehmung zugewandten Seite der Platte Klemmbacken (6) aufweist, die jeweils entlang der zweiten Längsachse bewegbar und mit einer der Endoberflächen der Stirnseiten der länglichen Ausnehmung mechanisch kontaktierbar und lösbar befestigbar sind.

2. Aufbau gemäß Anspruch 1, **dadurch gekennzeichnet, dass** die Zentrierbacke (2) sich in einem Querschnitt zu der zweiten Längsachse über den Verlauf der länglichen Ausnehmung in einem Querschnitt zu der ersten Längsachse räumlich hinaus erstreckt und in die längliche Ausnehmung klemmbar ist.

3. Aufbau gemäß Anspruch 1 oder 2, **dadurch gekennzeichnet, dass** die Zentrierbacke (2) die Form eines Keils, eines Kegels, eines Kegelstumpfes, einer Halbkugel oder eines Quaders aufweist und insbesondere aus Kunststoff besteht.

4. Aufbau gemäß einem der vorhergehenden Ansprüche, **dadurch gekennzeichnet, dass** die Zentrierbacke (2) lotrecht zur Platte oder von einer der Stirnseiten der ersten Längsachse in die sowie aus der länglichen Ausnehmung bewegbar ist.

5. Aufbau gemäß einem der vorhergehenden Ansprüche, **dadurch gekennzeichnet, dass** zwei einen Öffnungswinkel der länglichen Ausnehmung entsprechende Keile erzeugende Zentrierbacken und vier Klemmbacken geschaffen sind.

6. Aufbau gemäß einem der vorhergehenden Ansprüche, **dadurch gekennzeichnet, dass** die längliche Aussparung entlang der zweiten Längsachse sich räumlich über die Länge der länglichen Ausnehmung entlang der ersten Längsachse derart hinaus erstreckt, dass die Zentrierbacke(n) aus der länglichen Ausnehmung heraus und entlang der zweiten Längsachse über die Endoberfläche(n) hinaus außerhalb der länglichen Ausnehmung bewegbar ist/sind.

7. Aufbau gemäß einem der vorhergehenden Ansprüche, **dadurch gekennzeichnet, dass** der Abstand zweier Klemmbacken an zwei Stirnseiten größer als die Länge der länglichen Ausnehmung ist.

8. Aufbau gemäß einem der vorhergehenden Ansprüche, **dadurch gekennzeichnet, dass** der mechanische Kontakt der Klemmbacken mit den Stirnseiten der länglichen Ausnehmung mittels mechanischem Druck oder Magnetkraft geschaffen wird.

9. Aufbau gemäß einem der vorhergehenden Ansprüche, **dadurch gekennzeichnet, dass** die Klemmbacken zur Anpassung an einen Winkel zwischen der ersten Längsachse und einer dritten Längsachse (L3) einer Rotorwelle um ein Lot zur Platte drehbar einstellbar sind.

10. Verfahren zur Positionierung und Befestigung eines Werkzeugs unter Verwendung eines Aufbaus gemäß einem der vorhergehenden Ansprüche an einer sich entlang einer ersten Längsachse sich räumlich erstreckenden und an zwei Stirnseiten vier Endoberflächen aufweisenden länglichen Ausnehmung, insbesondere Nut, insbesondere eines Rotors, mit den Schritten
- (ST1) Bewegen der Zentrierbacken der Zentriereinrichtung in die länglichen Ausnehmung;
- (ST2) Bewegen der Klemmbacken der Klemmeinrichtung jeweils entlang der zweiten Längsachse und mechanisches Kontaktieren mit jeweils einer der, insbesondere vier, Endoberflächen der zwei Stirnseiten der länglichen Ausnehmung und Befestigen an den Endoberflächen.

11. Verfahren gemäß Anspruch 10, **gekennzeichnet durch** beim Bewegen und/oder Kontaktieren ausgeführtes Drehen der Klemmbacken zur Anpassung an einen Winkel zwischen der ersten Längsachse und einer dritten Längsachse einer Rotorwelle um ein Lot zur Platte.

12. Verfahren gemäß Anspruch 10 oder 11, **gekennzeichnet durch** (ST4) Bewegen der Zentrierbacke(n) lotrecht zur Platte aus der länglichen Ausnehmung heraus und entlang der zweiten Längsachse über die Endoberfläche(n) hinaus außerhalb der Nut.

13. Verfahren gemäß Anspruch 10 oder 11, **gekennzeichnet durch** (ST4) Bewegen der Zentrierbacke(n) aus den Stirnseiten der länglichen Ausnehmung heraus.

## Claims

1. Structure (A) for the positioning and fastening of a tool, which can be fastened on the structure, on an elongated recess, especially a groove (N), especially of a rotor, which extends spatially along a first longitudinal axis (L1) and on two end faces (S1, S2) has end surfaces, wherein
- the structure has a plate (3), which has a cutout which extends spatially along a second longitudinal axis (L2) and can be aligned with this parallel to the first longitudinal axis, and enframes the elongated recess, which plate is fixedly connected to a centering device;
- wherein the centering device (1) has at least one centering jaw (2), **characterized in that** the plate (3) is fixedly connected to a clamping device and the centering jaw can be moved in the cutout along the second longitudinal axis and into and out of the elongated recess;
- wherein the clamping device (5), on the side of the plate facing the elongated recess, has clamping jaws (6) which can be moved in each case along the second longitudinal axis and brought into mechanical contact with, and releasably fastened to, one of the end surfaces of the end faces of the elongated recess.

2. Structure according to Claim 1, **characterized in that** the centering jaw (2) extends spatially in a cross section to the second longitudinal axis beyond the extent of the elongated recess in a cross section to the first longitudinal axis and can be clamped in the elongated recess.

3. Structure according to Claim 1 or 2, **characterized in that** the centering jaw (2) has the shape of a wedge, a cone, a truncated cone, a semi-sphere or a parallelepiped and especially consists of plastic.

4. Structure according to one of the preceding claims, **characterized in that** the centering jaw (2) can be moved perpendicularly to the plate or from one of the end faces of the first longitudinal axis into and out of the elongated recess.

5. Structure according to one of the preceding claims, **characterized in that** two centering jaws, creating wedges which correspond to an opening angle of the elongated recess, and four clamping jaws are created.

6. Structure according to one of the preceding claims, **characterized in that** the elongated cutout extends spatially along the second longitudinal axis beyond the length of the elongated recess along the first longitudinal axis in such a way that the centering jaw(s) can be moved out of the elongated recess and along the second longitudinal axis beyond the end surface(s) outside the elongated recess.

7. Structure according to one of the preceding claims, **characterized in that** the spacing of two clamping jaws on two end faces is greater than the length of the elongated recess.

8. Structure according to one of the preceding claims, **characterized in that** the mechanical contact of the clamping jaws with the end faces of the elongated recess is created by means of mechanical pressure or magnetic force.

9. Structure according to one of the preceding claims, **characterized in that** the clamping jaws can be rotatably adjusted around a vertical to the plate for adapting to an angle between the first longitudinal axis and a third longitudinal axis (L3) of a rotor shaft.

10. Method for the positioning and fastening of a tool using a structure according to one of the preceding claims, on an elongated recess, especially a groove, especially of a rotor, which extends spatially along a first longitudinal axis and on two end faces has four end surfaces, with the steps
- (ST1) moving the centering jaws of the centering device into the elongated recess;
- (ST2) moving the clamping jaws of the clamping device in each case along the second longitudinal axis and bringing the clamping jaws into mechanical contact in each case with one of the especially four end surfaces of the two end faces of the elongated recess and fastening the clamping jaws on the end surfaces.

11. Method according to Claim 10, **characterized by** rotation of the clamping jaws around a vertical to the plate, carried out during the moving and/or contacting, for adapting to an angle between the first longitudinal axis and a third longitudinal axis of a rotor shaft.

12. Method according to Claim 10 or 11, **characterized by** (ST4) movement of the centering jaw(s), perpendicularly to the plate, out of the elongated recess and along the second longitudinal axis beyond the end surface(s) outside the groove.

13. Method according to Claim 10 or 11, **characterized by** (ST4) movement of the centering jaw(s) out of the end faces of the elongated recess.

## Revendications

1. Structure (A) de mise en position et de fixation d'un outil, pouvant être fixé à la structure, à un évidement oblong, notamment une rainure (N), notamment d'un rotor, s'étendant dans l'espace suivant un premier axe (L1) longitudinal et ayant des surfaces d'extrémité sur deux côtés (S1, S2) frontaux, dans laquelle
- la structure a une plaque (3), ayant un évidement s'étendant dans l'espace suivant un deuxième axe (L2) longitudinal et pouvant être orienté avec celui-ci parallèlement au premier axe longitudinal, et encadre l'évidement longitudinal, laquelle plaque est reliée fixement à un dispositif de centrage ;
- dans laquelle le dispositif (1) de centrage a au moins une mâchoire (2) de centrage, **caractérisée en ce que** la plaque (3) est reliée fixement à un dispositif de serrage et la mâchoire de centrage peut être déplacée dans l'évidement suivant le deuxième axe longitudinal et entrer dans l'évidement longitudinal, ainsi qu'en sortir ;
- dan laquelle le dispositif (5) de serrage a, du côté tourné vers l'évidement longitudinal de la plaque, des mâchoires (6) de serrage, qui, chacune, sont mobiles suivant le deuxième axe longitudinal et peuvent être mises en contact mécaniquement et peuvent être fixées de manière amovible à l'une des surfaces d'extrémité des côtés frontaux de l'évidement longitudinal.

2. Structure suivant la revendication 1, **caractérisée en ce que** la mâchoire (2) de centrage s'étend dans l'espace, dans une section transversale par rapport au deuxième axe longitudinal, au-delà du tracé de l'évidement longitudinal, dans une section transversale, par rapport au premier axe longitudinal et peut être serrée dans l'évidement longitudinal.

3. Structure suivant la revendication 1 ou 2, **caractérisée en ce que** la mâchoire (2) de centrage a la forme d'un coin, d'un cône, d'un tronc de cône, d'une hémisphère ou d'un parallélépipède et est, notamment, en matière plastique.

4. Structure suivant l'une des revendications précédentes, **caractérisée en ce que** la mâchoire (2) de centrage peut entrer, ainsi que sortir, de l'évidement longitudinal, perpendiculairement à la plaque ou par l'un des côtés frontaux du premier axe longitudinal.

5. Structure suivant l'une des revendications précédentes, **caractérisée en ce qu'**il est prévu deux mâchoires de centrage, produisant un angle d'ouverture des coins correspondant à l'évidement longitudinal et quatre mâchoires de serrage.

6. Structure suivant l'une des revendications précédentes, **caractérisée en ce que** l'évidement longitudinal s'étend suivant le deuxième axe longitudinal, dans l'espace, au-delà de la longueur de l'évidement longitudinal suivant le premier axe longitudinal, de manière à pouvoir faire entrer la ou les mâchoires de centrage de l'évidement longitudinal et suivant le deuxième axe longitudinal, au-delà de la ou des surfaces d'extrémité à l'extérieur de l'évidement longitudinal.

7. Structure suivant l'une des revendications précédentes, **caractérisée en ce que** la distance entre deux mâchoires de serrage, sur deux côtés frontaux, est plus grande que la longueur de l'évidement longitudinal.

8. Structure suivant l'une des revendications précédentes, **caractérisée en ce que** le contact mécanique des mâchoires de serrage avec les côtés frontaux de l'évidement longitudinal est obtenu au moyen d'une pression mécanique ou d'une force magnétique.

9. Structure suivant l'une des revendications précédentes, **caractérisée en ce que** les mâchoires de serrage sont réglables en rotation autour d'une perpendiculaire à la plaque pour s'adapter à un angle entre le premier axe longitudinal et un troisième axe (L3) longitudinal d'un arbre de rotor.

10. Procédé de mise en position et de fixation d'un outil en utilisant une structure suivant l'une des revendications précédentes à un évidement longitudinal, notamment une rainure, notamment d'un rotor, s'étendant dans l'espace suivant un premier axe longitudinal et ayant, aux deux côtés frontaux, quatre surfaces d'extrémité, comprenant les stades
- (ST1) déplacement des mâchoires de centrage du dispositif de centrage pour les faire venir dans l'évidement longitudinal ;
- (ST2) déplacement des mâchoires de serrage du dispositif de serrage, respectivement, suivant le deuxième axe longitudinal et mise en contact mécanique avec, respectivement, l'une, des notamment quatre, surfaces d'extrémité des deux côtés frontaux de l'évidement longitudinal et fixation aux surfaces d'extrémité.

11. Procédé suivant la revendication 10, **caractérisé par** une rotation, exécutée lors du déplacement et/ou de la mise en contact, des mâchoires de serrage pour s'adapter à un angle entre le premier axe longitudinal et un troisième axe longitudinal d'un arbre de rotor autour d'une perpendiculaire à la plaque.

12. Procédé suivant la revendication 10 ou 11, **caractérisée par** (ST4) déplacement de la ou des mâchoires de centrage perpendiculairement à la plaque, en les sortant de l'évidement longitudinal et suivant le deuxième axe longitudinal, au-delà de la ou des surfaces d'extrémité à l'extérieur de la rainure.

13. Procédé suivant la revendication 10 ou 11, **caractérisé par** (ST4) déplacement de la ou des mâchoires de centrage hors des côtés frontaux de l'évidement longitudinal.
